## Europäisches Patentamt
## European Patent Office
## Office européen des brevets

(19)

(11) Veröffentlichungsnummer: **0 043 951**
**B1**

(12)

# EUROPÄISCHE PATENTSCHRIFT

(45) Veröffentlichungstag der Patentschrift:
28.09.83

(51) Int. Cl.³: **B 29 F 3/12**, B 29 D 9/00

(21) Anmeldenummer: 81104878.4

(22) Anmeldetag: 24.06.81

(54) Verfahren und Vorrichtung zur Herstellung mehrschichtiger Flachfolien aus thermoplastischen Kunststoffen durch Coextrusion.

(30) Priorität: 05.07.80 DE 3025564

(43) Veröffentlichungstag der Anmeldung:
20.01.82 Patentblatt 82/3

(45) Bekanntmachung des Hinweises auf die Patenterteilung:
28.09.83 Patentblatt 83/39

(84) Benannte Vertragsstaaten:
BE DE FR GB LU NL SE

(56) Entgegenhaltungen:
BE-A-672 832
DE-A-1 407 515
DE-A-1 479 111
FR-A-1 088 928
FR-A-2 167 453
US-A-1 356 891

(73) Patentinhaber: HOECHST AKTIENGESELLSCHAFT,
Postfach 80 03 20, D-6230 Frankfurt am Main 80 (DE)

(72) Erfinder: Dinter, Peter, Am Wiesenberg 4,
D-6227 Hallgarten (DE)
Erfinder: Kolbe, Andreas, Am Hohen Stein 8,
D-6200 Wiesbaden (DE)

BUNDESDRUCKEREI BERLIN

## Verfahren und Vorrichtung zur Herstellung mehrschichtiger Flachfolien aus thermoplastischen Kunststoffen durch Coextrusion

Die vorliegende Erfindung betrifft ein Coextrusionsverfahren zur Fertigung mindestens zweischichtiger Verbundfolien in Flachform, deren Schichten aus unterschiedlichen Rohstoffen bestehen, die in Extrudern plastifiziert und in einem speziell ausgebildeten Adapter zu einem Schmelzstrang zusammengeführt werden. In erweiterter Form schließt das Verfahren auch die Herstellung verstreckter Verbundfolien ein.

Weiterhin betrifft die Erfindung eine Vorrichtung zur Durchführung des Verfahrens unter Verwendung eines speziell konstruierten Adapters.

Verbund- oder Mehrschichtfolien aus thermoplastischen Kunststoffen werden hergestellt, um die guten Eigenschaften verschiedener Kunststoffe gezielt in einem Produkt zu nutzen. Neben den konventionellen, seit vielen Jahren schon eingeführten Verfahren, wie Kaschieren, Laminieren und Extrusionsbeschichtung, hat die Coextrusion in letzter Zeit erheblich an Bedeutung gewonnen.

Im Hinblick auf ihre Anwendung sind jedoch verschiedene Kriterien — sowohl diejenigen die an das Verfahren selbst angeknüpft sind, als auch solche grundsätzlicher Natur wie z. B. das Haftungsproblem — zu berücksichtigen.

Letzteres Phänomen spielt bei der Kombination artgleicher bzw. artverwandter Materialien, wie z. B. Polyäthylen und Polypropylen, kaum eine und wenn überhaupt dann nur eine untergeordnete Rolle. Bei der Verarbeitung artfremder Rohstoffe kommt man dagegen kaum ohne haftvermittelnde Substanzen oder spezielle, adhäsionssteigernde Verfahrenstechniken, wie z. B. Corona- oder Gasbehandlung, aus. Dadurch wird aber der Folienherstellungsprozeß ohne Zweifel technisch aufwendiger und damit in letzter Konsequenz auch kostspieliger. Entsprechend hat man deshalb Anstrengungen unternommen, die daraufhin abzielten, die Verbundfestigkeiten coextrudierter Produkte zusätzlich zu den normal vorhandenen physikalisch-chemischen Haftmechanismen durch mechanische Oberflächenverankerungen der zu verbindenden Schichten zu steigern. Bei der technischen Realisierung ging man von der Grundidee aus, die zu vereinigenden Schichtseiten derartig zu profilieren, daß ein reißverschlußartiges Ineinandergreifen erzielt wird.

Ein derartiges Verfahren ist in »Kunststoffe« 69 (1979) 2, Seiten 81 bis 82 beschrieben. Hierbei wird eine mehrschichtige Schlauchfolie mittels einer speziellen Runddüse hergestellt. Diese besteht aus einem feststehenden, äußeren Düsenkörper sowie rotierenden, profilierten Düsenlippen. Aus dieser Kombination resultiert eine spiralförmige Verzahnung der Schichten. Nachteil dieses Verfahrens ist, daß hierfür eine konstruktiv aufwendige und damit auch teure Spezialdüse erforderlich ist, die zudem für keinen weiteren Zweck verwendet werden kann.

Selbst einfache, in einer Produktion zum alltäglichen Ablauf zählende Maßnahmen, wie Umstellung des Fabrikationsprogrammes auf größere Folienbreiten oder auch qualitätsbedingter Werkzeugwechsel infolge Verunreinigung der Düse, machen die Bereitstellung weiterer Düsen erforderlich, was technisch aufwendig ist und damit auch erhöhte Betriebskosten zur Folge hat.

Ein weiterer Nachteil des Verfahrens ist in der Limitierung der Verzahnungsstellen zu sehen. Da letztere mit für die Verbundhaftung ausschlaggebend sind, ist eine möglichst hohe Anzahl davon erwünscht. Sowohl der Umfang des Düsenspaltes der jeweilig zur Verfügung stehenden Runddüse als auch die fertigungstechnischen Möglichkeiten zur Einarbeitung der Verzahnung in die Düsenlippen setzen aber automatisch einer unbegrenzten Vervielfachung die Grenze.

Von den gegenüber dem zuvor abgehandelten Verfahren vorgebrachten Einwänden treffen die meisten vorbehaltlos auch auf den Extruderkopf der DE-AS 2 123 331 sowie auf das Verfahren der US-PS 3 444 031 zu. Hier wird, abgesehen von geringfügigen apparativen Varianten, die Herstellung mehrschichtiger, mechanisch verankerter Flachfolien beschrieben. In beiden Fällen bedient man sich konstruktiv besonders gestalteter Breitschlitzdüsen. Das an der fertigen Verbundfolie gewünschte Verzahnungsprofil wird durch in den Düsenkörper eingesetzte Verteilerelemente vorgegeben.

Die mechanische Verankerung von coextrudierten Polymerschichten wird u. a. auch in der DE-AS 1 948 442 beschrieben. Zur Herstellung von mehrschichtigen Flachfolien benutzt man hier einen einer Breitschlitzdüse unmittelbar vorgeschalteten, der Vereinigung der Schmelzströme dienenden Adapter mit kreisförmigem Querschnitt. In einer besonderen Ausführungsversion kann die Lippe des Adapters an der die Schmelzeströme zusammenfließen mit einer Verzahnung versehen sein. Der in derartig profilierter Form vereinigte, zweischichtige Polymerstrang wird in dem unmittelbar nachfolgenden Breitschlitzwerkzeug zur Flachfolie ausgeformt. Der Nachteil liegt hier unübersehbar in dem Mißverhältnis der Abmessungen von Adapter zur Breitschlitzdüse. Geht man von den derzeit gängigen Dimensionen der Düseneinlaufkanäle, deren Durchmesser sich zwischen 20 und 30 mm bewegt, aus und setzt dagegen die Arbeitsbreiten der heute üblicherweise erwendeten Breitschlitzdüsen mit etwa 1500 mm an, so wird deutlich, daß die auf der mit dem Düseneinlaufkanal korrespondierenden Adapterlippe erreichbare Verzahnungsdichte an der fertig ausgeformten Flachfolie kaum noch haftungssteigernde Wirkung haben kann. Zudem gehen von den ohnehin schon wenigen Verzahnungsstellen noch einige verloren, da sie in die umgelehten, der späteren Säumung zum Opfer fallenden Randpartien fallen.

In diesem Zusammenhang tritt noch ein weiterer Nachteil des besprochenen Adapters zutage, nämlich die Kreisform des Schmelzekanals. Diese Gestalt wirkt sich nicht gerade günstig auf die Dickengleichmäßigkeit der Einzelschichten sowie die des Gesamtverbundes aus. Je mehr Umformprozesse man den Schmelzeschichten zumutet umso größer ist die Gefahr der unerwünschten Profilverschlechterung des Fertigproduktes.

Aufgabe der vorliegenden Erfindung ist es, ein einfaches Verfahren zur Coextrusion von Folien mit verbesserter Verbundhaftung unter Verwendung eines Adapters vorzuschlagen, wobei die Nachteile der bekannten Techniken vermieden werden sollen.

Gelöst wird die vorstehend genannte Aufgabe durch ein Verfahren zur Herstellung einer coextrudierten Verbundfolie aus mindestens zwei thermoplastischen Kunststoffen, bei dem die Kunststoffe plastifiziert und unter Druck in einem Adapter zu einem durch Profilierung der Kontaktflächen mechanisch verankerten Schmelzestrang zusammengeführt, nachfolgend in einer Breitschlitzdüse zum Flachfilm ausgeformt und anschließend zur Verbundfolie abgekühlt werden, dessen kennzeichnendes Merkmal darin besteht, daß man in mehreren, voneinander getrennten, übereinanderliegenden Ebenen einzelne, rechteckig ausgeformte Kunststoffschmelzeströme zu mehrschichtigen Schmelzesträngen mit einer Breite, die ein Vielfaches der des Einlaufkanals der Breitschlitzdüse beträgt, zusammenführt und aus diesen gleichartig geschichteten Strängen durch ihre Zusammenführung in eine gemeinsame, sich in Richtung des Austrittsspaltes der Breitschlitzdüse erstreckende Ebene, bei gleichzeitiger Reduzierung der Breite der Einzelstränge sowie ihre seitliche Aneinanderlagerung in dieser Ebene einen kombinierten Verbundstrang mit dem Schichtaufbau der Einzelstränge und der Breite des Düseneinlaufkanals bildet.

Bevorzugt wird das Verfahren derart durchgeführt, daß die aus verschiedenen Ebenen in eine gemeinsame Ebene zusammengeführten mehrschichtigen Schmelzestränge einen unterschiedlichen Schichtaufbau aufweisen.

Das Verfahren ist besonders gut geeignet zur Herstellung von Verbundfolien, die anschließend in wenigstens eine Richtung verstreckt und gegebenenfalls einer Thermofixierung unterworfen werden und bei denen aus bestimmten Gründen Kunststoffkombinationen Verwendung finden, bei denen einer oder mehrere der Kunststoffe unterschiedliche Streckbarkeit aufweisen.

Dieses Verfahren wird dann derart ausgeführt, daß man das (die) schlechter streckbare(n) Polymere(n) in Form bevorzugt eines Sägezahnprofils zwischen die Schichten aus dem (den) besser verstreckbaren Polymeren einbettet. Bei der wenigstens einachsig, bevorzugt jedoch zweiachsig durchgeführten Streckung wird dem Material mit der schlechteren Streckbarkeit die Streckbarkeit des besser streckbaren Materials aufgezwungen, ohne daß es zu einer Trennung der Schichten kommt.

Beispielsweise Kombinationen solcher Art sind Polyamide-Polyäthylene, Polypropylen-Äthylvinylalkoholcopolymere, Polyester, z. B. Polyäthylenterephtalat-Polyäthylene, u. a.

Durch das erfindungsgemäße Verfahren können also auch gestreckte Verbundfolien aus Materialien hergestellt werden, die sonst nach der Coextrusion und anschließender Streckung zur Delaminierung neigen würden. Dies ist für die Praxis von besonderer Bedeutung, da hierdurch Spezialtypen von Verbundfolien mit definiert auf den Verwendungszweck abgestimmten Eigenschaften hergestellt werden können.

Die Erfindung betrifft außerdem eine Vorrichtung zur Durchführung des Verfahrens, deren kennzeichnendes Merkmal darin besteht, daß in einem eine Austrittsöffnung 23 sowie mehrere, der Einspeisung verschiedener Polymerschmelzen dienender Schmelzesammelkanäle 15, 16, 17, 18 enthaltenden Gehäuse 10, 11, 12, 13, 14 in verschiedenen, übereinander gelagerten Ebenen mehrere, rechteckige Austrittsschlitze 20 mit einer Breite, die ein Vielfaches der Breite der Austrittsöffnung 23 beträgt, eingearbeitet sind, die durch Trennwände 21 in übereinanderliegende Einzelprofile 20a—20d unterteilt sind, die einerseits über Bohrungen 19 mit den Schmelzesammelkanälen 15 bis 18 in Verbindung stehen und andererseits in Kanäle 22 münden, die in Ausgangsrichtung in ihrer Breite konvergierende sowie ihrer Höhe divergierende Form aufweisen und so in das Zwischenstück 13 eingearbeitet sind, daß sie an ihrer Ausgangsseite auf einer Ebene nebeneinanderliegend mit der Austrittsöffnung 23 des Düsenflansches 14 korrespondieren.

Bevorzugt ist eine Vorrichtung, bei der in die Austrittsschlitze 20 mehrere Trennwände 21 eingebaut sind. Hierdurch ist eine weitere Verzahnung der Schichten möglich.

Insbesondere hat sich eine Vorrichtung in der Praxis bewährt, bei der die Trennwände auswechselbar sind, da sich hierdurch die Verzahnung, d. h. die Haftfestigkeit der Schichten, bezogen auf die eingesetzten Kunststoffe, durch jeweilige Wahl des Profils der Trennwände optimieren läßt.

Die Trennwände sind bevorzugt derart angeordnet, daß sie zwischen sich Profile in Form von Schlitzen, Sägezähnen, Wellenlinien, Schwalbenschwänzen o. dgl. bilden.

Nachfolgend wird die Erfindung anhand von Zeichnungen näher erläutert, ohne daß jedoch eine Einschränkung auf die gezeigten Ausführungsformen bestehen soll.

Die Figuren zeigen

Fig. 1 ein Prinzipschema der Erfindung,

Fig. 2 einen Schnitt durch eine mit dem Verfahren erzielbare Verbundfolie,

Fig. 3 eine perspektivische Darstellung der erfindungsgemäßen Vorrichtung mit einseitig abgenommenem Deckel im konischen Übergangsstück, sowie entferntem Düsenflansch zwecks besserer Einsicht in das Innere der Vorrichtung,

Fig. 4 einen Querschnitt durch die erfindungsgemäße Vorrichtung gemäß der Linie A-A in Fig. 5,

Fig. 5 einen Schnitt durch die erfindungsgemäße Vorrichtung gemäß der Schnittlinie B-B in Fig. 4,

Fig. 6 einen Schnitt durch eine gemäß der Erfindung erzielbare, dreischichtige, unverstreckte Verbundfolie in ABA-Struktur, bestehend aus einer Kombination von Rohstoffen mit guter und schlechter Verstreckbarkeit,

Fig. 7 einen Schnitt durch die Folie gemäß Fig. 6 nach deren Querverstreckung.

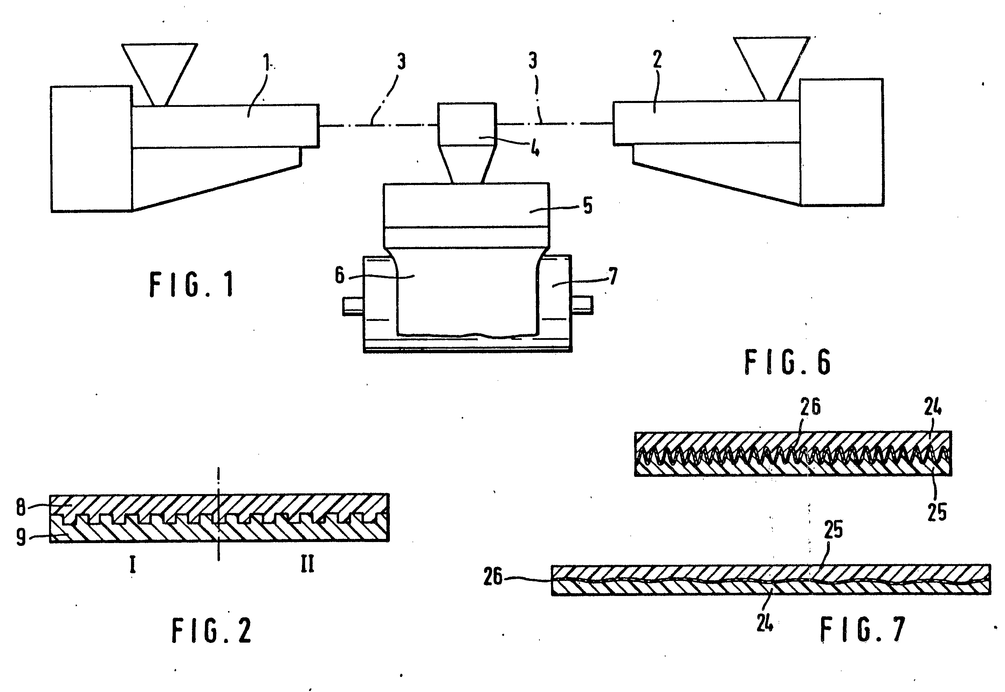

Gemäß Fig. 1 sind zur Herstellung zweischichtiger, verzahnter Verbundfolien die Extruder 1 und 2 vorhanden, die über Schmelzeleitungen 3 mit der erfindungsgemäßen Vorrichtung 4 in Verbindung stehen. Letztere ist unmittelbar an eine herkömmliche Breitschlitzdüse 5 angeflanscht. Der aus der Breitschlitzdüse 5 austretende Schmelzefilm 6 wird auf der Kühlwalze 7 unter seine Schmelzetemperatur abgekühlt. Einerseits kann der so verfestigte Film als fertige Verbundfolie aufgewickelt oder bevorzugt einem bekannten mono- oder biaxialen Streckprozeß unterzogen werden.

Den Aufbau einer mit dem beschriebenen Verfahren erzielbaren, verzahnten, in einfachster Ausführung zweischichtigen Verbundfolie verdeutlicht Fig. 2. Danach setzt sich der fertige Film aus den zwei durch die Bauart der Vorrichtung vorgegebenen Hälften I und II zusammen, deren Schichten 8 und 9 aus verschiedenen, in den Extrudern 1 und 2 plastifizierten Rohstoffen A und B bestehen.

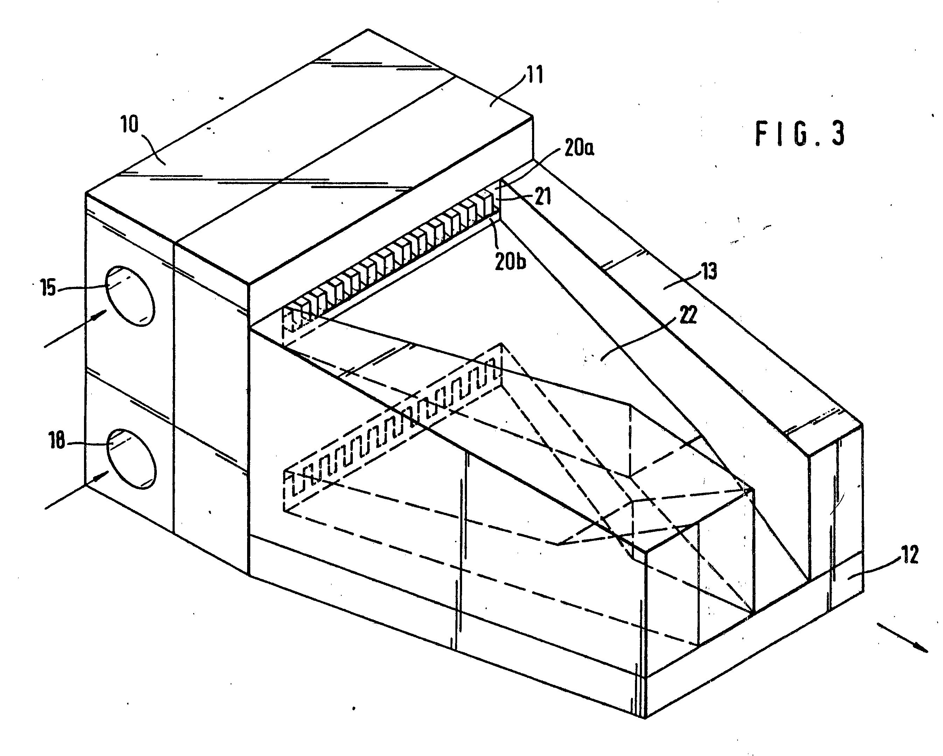

Die erfindungsgemäße Vorrichtung 4 besteht, wie die Fig. 3, 4 und 5 zeigen, aus einer Abschlußplatte 10, einem Zwischenstück 11, einem mit den Deckplatten 12 verschlossenen Übergangsstück 13 sowie einem dem Anschluß des Adapters an eine Breitschlitzdüse dienenden Flansch 14.

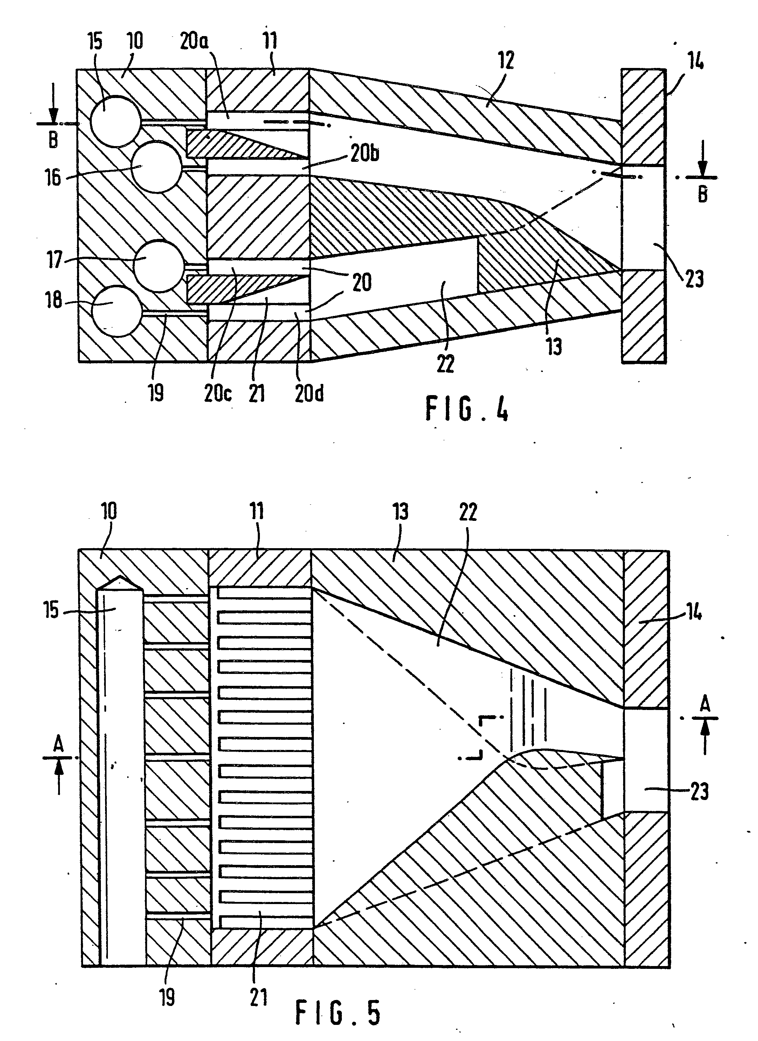

Alle genannten Einzelteile sind in bekannter Weise durch nicht dargestellte Schrauben zu einem kompakten Block zusammengefügt. Die Abschlußplatte 10 enthält mehrere Schmelzesammelkanäle 15, 16, 17, 18 zur Aufnahme der von den Extrudern 1/2 gelieferten Polymerschmelzen. Zur Herstellung einer zweischichtigen Folie in AB-Struktur gemäß Abbildungen 3 und 4 werden die Schmelzesammelkanäle 15 und 17 an den Extruder 1 sowie die Kanäle 16 und 18 an den Extruder 2 angeschlossen (die Extruder sind in Abbildung 1 dargestellt). Die Anzahl der Schmelzesammelkanäle 15 bis 18 richtet sich nach dem gewünschten Schichtaufbau der zu produzierenden Folie. Über etliche Verteilerbohrungen 19 stehen die Sammelkanäle 15 bis 18 in Verbindung mit den in das Zwischenstück 11, im wesentlichen rechteckig eingearbeiteten Austrittsschlitzen 20. Durch in das Zwischenstück eingesetzte, bevorzugte auswechselbare Trennwände 21 werden die Austrittsschlitze 20 in Profilschlitze 20a, 20b, 20c, 20d unterteilt. Gespeist mit Polymerschmelzen A und B über die Sammelkanäle 15 bis 18 und die Verteilerbohrungen 19, gestatten diese Profilschlitze 20a bis 20d die Ausformung von zwei separaten, zweischichtigen Polymersträngen.

Der die vorliegende Erfindung tragende Erfindungsgedanke betrifft im wesentlichen die mechanische Verankerung der verschiedenen Schichten durch Profilierung der zu verbindenden Kontaktflächen. Maßgebend hierfür ist einerseits die konstruktive Gestaltung der Trennwände 21. In einfachster Version reicht eine wechselweise Schlitzung der Elemente 21 in der dargestellten Art aus. Selbstverständlich können die Trennwände 21 auch andersartige Profilierungen, wie z. B. Schwalbenschwanz- oder Sägezahnnuten u. dgl. aufweisen.

Erheblichen Einfluß auf die Verbundwerte an der fertigen Folie hat andererseits auch die Anzahl der Verzahnungsstellen. Diese kann bei der erfindungsgemäßen Vorrichtung beliebig hoch veranschlagt werden. Erreicht wird dies durch die in Folienebene vorgenommene, die Unterbringung vieler Verzahnungsstellen begünstigende Verbreiterung der Profile 20a—20d sowie deren Vervielfachung durch Verlagerung in verschiedene, übereinander gelagerte Ebenen. Das sich an das Zwischenstück 11 anschließende Übergangsstück 13 erfüllt die Funktion der Zusammenführung der auf verschiedenen Ebenen gebildeten, mehrschichtigen Verbundstränge in einen gemeinsamen Schmelzestrang. Hierzu werden die einzelnen Verbundstränge in den entsprechend konisch ausgearbeiteten Kanälen 22 des Übergangsstückes 13 auf den im Düsenflansch 14 befindlichen Düseneingangsquerschnitt 23 umgeformt. In der nachgeschalteten Breitschlitzdüse erfolgt dann die endgültige Flachlegung des aus mehreren nebeneinanderliegenden Teilströmen zusammengesetzten Polymerstranges zur homogenen, mehrschichtigen, verzahnten Verbundfolie.

Neben der schon beschriebenen Einsatzmöglichkeit der Vorrichtung zur mechanischen Oberflächenverankerung coextrudierter Schichten besitzt sie noch einen weiteren, besonders für die Herstellung verstreckter Verbundfolien aus Kombinationen von gut verstreckbaren Rohstoffen mit solchen mit schlechter oder evtl. keiner Streckbarkeit, nutzbaren Vorteil. Dieser geht aus den Fig. 6 und 7 hervor, die eine mit der Vorrichtung coextrudierte dreischichtige Verbundfolie in ABA-Struktur im unverstreckten sowie quergestreckten Zustand zeigen. Die Folie besteht aus zwei Deckschichten 24 und 25 aus verstreckbarem Rohstoff sowie einer Zwischenschicht 26 aus nicht oder nur schlecht verstreckbarem Material. Letztere Schicht ist in Form eines dichten Sägezahnprofiles zwischen die Deckschichten 24 und 25 eingebettet. Man erhält dieses Profil durch Verwendung entsprechend gestalteter Trennwände 21 in der erfindungsgemäßen Vorrichtung. Durch den Streckvorgang wird das Sägezahnprofil der Zwischenschicht ziehharmonikaartig auseinandergezogen und erfährt so eine Längung in der Größenordnung der verstreckten Außenschicht. Über die Profilgestaltung in der Vorrichtung kann die Zwischenschicht an die Streckbedingungen angepaßt werden. Mit Hilfe der erfindungsgemäßen Vorrichtung können so nunmehr auch verstreckte Verbundfolien aus Rohstoffen mit unterschiedlichem Streckverhalten hergestellt werden.

Die Erfindung ermöglicht in einfacher Weise die Herstellung mehrschichtiger Verbundfolien, deren Schichten untereinander mechanisch verankert sind, wodurch auf ansonsten notwendige Haftvermittlerschichten verzichtet werden kann. Gemessen an anderen Verfahren, die den Einsatz technisch aufwendiger Spezialdüsen erfordern, kann die unkomplizierte Vorrichtung mit jeder beliebigen Breitschlitzdüse gekoppelt werden. Die konstruktive Auslegung der Vorrichtung gestattet es, an der zu produzierenden Mehrschichtfolie eine für deren Verbundfestigkeit ausschlaggebende, beliebige Verzahnungsdichte einzustellen, die unabhängig ist von den Dimensionen des Breitschlitzwerkzeuges.

## Patentansprüche

1. Verfahren zur Herstellung einer coextrudierten Verbundfolie aus mindestens zwei thermoplastischen Kunststoffen, bei dem die Kunststoffe plastifiziert und unter Druck in einem Adapter (4) zu einem durch Profilierung der Kontaktflächen mechanisch verankerten Schmelzestrang zusammengeführt, nachfolgend in einer Breitschlitzdüse (5) zum Flachfilm ausgeformt und anschließend zur Verbundfolie abgekühlt werden, dadurch gekennzeichnet, daß man in mehreren, voneinander getrennten, übereinanderliegenden Ebenen einzelne, rechteckig ausgeformte Kunststoffschmelzestränge (20a— 20d) mit einer Breite, die ein Vielfaches der des Einlaufkanales (23) der Breitschlitzdüse beträgt, zusammengeführt und aus diesen gleichartig geschichteten Strängen durch ihre Zusammenführung in eine gemeinsame, sich in Richtung des Austrittsspaltes der Breitschlitzdüse erstreckende Ebene, bei gleichzeitiger Reduzierung der Breite der Einzelstränge sowie ihre seitliche Aneinanderlagerung in dieser Ebene einen kombinierten Verbundstrang mit dem Schichtaufbau der Einzelstränge und der Breite des Düseneinlaufkanals (23) bildet.

2. Verfahren nach Anspruch 1, dadurch gekennzeichnet, daß die aus verschiedenen Ebenen in eine gemeinsame Ebene zusammengeführten, mehrschichtigen Schmelzestränge unterschiedlichen Schichtaufbau aufweisen.

3. Verfahren nach einem der Ansprüche 1 oder 2, dadurch gekennzeichnet, daß man Kunststoffe mit unterschiedlicher Streckbarkeit einsetzt, wobei man den oder die Kunststoff(e) mit der schlechteren Streckbarkeit in den oder die Kunststoff(e) mit der besseren Streckbarkeit einbettet.

4. Vorrichtung zur Durchführung des Verfahrens nach einem der Ansprüche 1 bis 3, dadurch gekennzeichnet, daß in einem eine Austrittsöffnung (23) soie mehrere, der Einspeisung verschiedener Polymerschmelzen dienender Schmelzesammelkanäle (15, 16, 17, 18) enthaltenden Gehäuse (10, 11, 12, 13, 14) in verschiedenen, übereinander gelagerten Ebenen mehrere, rechteckige Austrittsschlitze (20) mit einer Breite, die ein Vielfaches der Breite der Austrittsöffnung (23) beträgt, eingearbeitet sind, die durch Trennwände (21) in übereinanderliegende Einzelschlitze (20a, 20b, 20c, 20d) unterteilt werden, die einerseits über Bohrungen (19) mit den Schmelzesammelkanälen (15 bis 18) Verbindung besitzen und andererseits in Kanäle (22) eines Zwischenstücks (13) einmünden, die in Ausgangsrichtung in ihrer Breite konvergierende sowie in ihrer Höhe divergierende Form aufweisen und so in das Zwischenstück (13) eingearbeitet sind, daß sie an ihrer Ausgangsseite auf einer Ebene nebeneinanderliegend mit der Austrittsöffnung (23) des Düsenflansches (14) korrespondieren.

5. Vorrichtung nach Anspruch 4, dadurch gekennzeichnet, daß in die Austrittsschlitze (20) mehrere Trennwände (21) eingebaut sind.

6. Vorrichtung nach einem der Ansprüche 4 oder 5, dadurch gekennzeichnet, daß die profilierten Trennwände (21) auswechselbar sind.

## Claims

1. A process for the manufacture of a coextruded composite film comprised of at least two thermoplastic materials, wherein the thermoplastic materials are plasticized and united under pressure in an adapter means (4) to give a melt strand which is mechanically anchored by profiles provided on the contact surfaces; a flat film is subsequently produced by forcing the melt strand through a slot die (5), and the material is then colled down into a composite film, the process being characterized in that melt strands (20a—20d) of plastic materials, which have been formed rectangularly and individually in several planes lying one above the other and which have a width amounting to a multiple of the width of the inlet channel (23) of the slot die, are united, and in that by bringing the uniformly layered strands together in a common plane extending in the direction of the outlet orifice of the slot die and simultaneously reducing the width of the individual strands and adjoining them laterally in this plane, a combined composite strand is formed, the layer build-up of which corresponds to that of the individual strands and the width of which corresponds to that the slot die inlet channel (23).

2. A process as claimed in Claim 1, wherein the multi-layered melt strands, which form several planes are united in one common plane, have different layer build-ups.

3. A process as claimed in any of Claims 1 or 2, wherein plastic materials of different stretchabilities are used, whereby the less stretchable plastic material(s) is (are) embedded between the better stretchable plastic material(s).

4. An apparatus for carrying out the process claimed in any of Claims 1 to 3, characterized in that, in a housing (10, 11, 12, 13, 14) comprising an outlet orifice (23) and several melt collecting channels (15, 16, 17, 18) where different polymer melts are fed in, there are provided a number of rectangular outlet slots (20) having a width amounting to a multiple of the width of the outlet orifice (23) and being arranged in different planes which are located one above the other, said outlet slots being divided by partition walls (21) into a number of individual slots (20a, 20b, 20c, 20d) which lie one above the other and which, via bores (19), on one end are connected with the melt collecting channels (15, 16, 17, 18), and on their other end are open towards channels (22) of an intermediate piece (13) which, in the direction of the outlet, have a convergent width and a divergent height and are embedded into the intermediate piece (13) such that on their outlet end they are aligned side-by-side in one plane and are in correspondence with the outlet orifice (23) of the die flange (14).

5. An apparatus as claimes in Claim 4, wherein several partition walls (21) are provided in the outlet slots (20).

6. An apparatus as claimed in any of Claims 4 or 5, wherein the profiled partition walls (21) are exchangeable.

### Revendications

1. Procédé de fabrication d'une feuille composite coextrudée, composée d'au moins deux matières thermoplastiques, dans lequel les matières plastiques sont plastifiées et réunies sous pression dans un adaptateur (4) pour obtenir un boudin de masses en fusion ancré mécaniquement par profilage des surfaces de contact, boudin qui est ensuite transformé en un film plat dans une filière plate (5), après quoi il est refroidi pour donner une feuille composite, caractérisé en ce que l'on réunit, dans plusieurs plans séparés et situés les uns au-dessus des autres, des boudins (20a à 20d) de matières plastiques en fusion de forme rectangulaire et dont la largeur est très supérieure à celle du canal d'entrée (23) de la filière plate (5), et que l'on forme à partir de ces boudins formés, de manière analogue, de couches superposées, en les réunissant dans un plan commun qui s'étend en direction de la fente de sortie de la filière plate (5), tout en réduisant la largeur des différents boudins ainsi que grâce à leur mise côte à côte dans ce plan, un boudin composite combiné ayant la constitution en couches des différents boudins et la largeur du canal (23) d'entrée de la filière

2. Procédé selon la revendication 1, caractérisé en ce que les boudins de masses en fusion à plusieurs couches, provenant de plans différents, et réunis dans un plan commun, présentent des structures en couches différentes.

3. Procédé selon la revendication 1 ou 2, caractérisé en ce que l'on emploie des matières plastiques ayant différentes aptitudes à l'étirage, la ou les matières plastiques ayant la moins bonne aplitude à l'étirage étant placée ou placées dans la ou les matières plastiques ayant la meilleure aplitude à l'étirage.

4. Dispositif destiné à l'application du procédé selon l'une des revendications 1 à 3, caractérisé en ce que, dans un boîtier (10, 11, 12, 13, 14) comportant une ouverture de sortie (23) et plusieurs canaux (15, 16, 17, 18) de masses en fusion servant à amener différentes masses en fusion, sont agencées dans différents plans situés les uns au-dessus des autres, plusieurs fentes de sortie rectangulaires (20) dont la largeur est très supérieure à la largeur de l'ouverture de sortie (23), ces fentes de sortie (20) étant divisées par des cloisons (21) en fentes individuelles (20a, 20b, 20c, 20d) situées les unes au-dessus des autres, reliées d'une part par des trous (19) aux canaux (15 à 18) collecteur de masses fondues et, d'autre part, débouchant dans des cannaux (22) d'une pièce intermédiaire (13), ces canaux (22) étant, dans le sens de la sortie, de forme convergente en largeur et de forme divergente en hauteur et étant placés de telle manière dans la pièce intermédiaire (13) que, du côté de leur sortie, se trouvant les uns à côté des autres dans un plan, ils correspondent à l'ouverture de sortie (23) de la plaque de buse (14).

5. Dispositif selon la revendication 4, caractérisé en ce que plusieurs cloisons (21) sont montées dans les fentes de sortie (20).

6. Dispositif selon l'une des revendications 4 ou 5, caractérisé en ce que les cloisons profilées (21) sont échangeables.

FIG. 1

FIG. 2

FIG. 6

FIG. 7

7

FIG. 3

0 043 951

FIG. 4

FIG. 5

11